# EUROPEAN PATENT APPLICATION

(11) **EP 1 286 125 A1**
(43) Date of publication of application: **26.02.2003**
(21) Application number: 02722793.3
(22) Date of filing: 25.04.2002
(51) Int. Cl.: F42B 3/12, B60R 21/26

(54) **INITIATOR ASSEMBLY AND GAS GENERATOR USING THE SAME**

(30) Priority: 27.04.2001 JP 2001132460
(71) Applicant: Daicel Chemical Industries, Ltd., Sakai-shi, Osaka 590-8501 (JP)
(72) Inventor: KUBOZUKA, Satoshi, Himeji-shi, Hyogo 671-1234 (JP); ODA, Shingo, Himeji-shi, Hyogo 671-1224 (JP)
(74) Representative: Grünecker, Kinkeldey, Stockmair & Schwanhäusser Anwaltssozietät
(86) International application number: JP0204158
(87) International publication number: WO02088619

(57) **Abstract**

The present invention provides an initiator assembly in which the number of constituent parts is reduced, manufacturing facilitation of the constituent parts themselves is enhanced, the initial performance can be maintained even if the initiator assembly is used for a long term, and the conductive pins can reliably be held even if the initiator assembly is exposed to a high temperature.

The initiator assembly comprises an electric type initiator and a metal collar for holding the electric type initiator, head portions of the conductive pins of the electric type initiator are electrically insulated from each other but are integral with each other, and the head portions are a disk in shape as a whole.

## Description

### Technical Field of the Invention

The present invention relates to an initiator assembly comprising an electric type initiator which is activated by an electric signal at a time of collision, and more particularly to an initiator assembly which is used in a gas generator for an air bag or a gas generator for a seat belt pretensioner which are safety system of a motor vehicle for burning and/or expanding a propellant (e.g., a gas generating means), and the invention also relates to a gas generator using the initiator assembly.

### Prior Art

The air bag apparatus and the seat belt pretensioner play an important part on the decrease in deaths and injuries caused by collisions. The initiator assembly comprises an electrical type initiator activated by the electric signal outputted from a collision detecting system, the initiator assembly is fixed to these safety devices via a metal collar and has a function of starting the operation of these safety devices.

As an electrical initiator in conventional initiator assemblies, it is known that the electric initiator includes a lot of constituting elements, and most of the electric initiators have a molded member and a cylindrical member which is combined with each other to form a cavity. The initiator further has at least one conductive pin which is a conductive path extending from the outside of the molded member and the cylindrical member to the cavity. An electric resistance member called a bridge wire is arranged inside the cavity, and a conductive pin is connected thereto. A compound having a very high thermal sensitivity, which is called as a primer is arranged in the vicinity of the bridge wire. Further, another compound called as an outputting charge (or a priming) is stored inside the cavity in the vicinity of the primer.

The initiator having the above structure starts operating when the electric signal is transmitted to the conductive pin. The bridge wire can convert an electric energy in the signal into a thermal energy, and the thermal energy increases a temperature of a resistance body, whereby an igniting reaction of the primer is started. The igniting reaction of the primer causes an igniting reaction of a priming, and an increase of the pressure and the heat generated by these reactions break the cup to discharge a hot gas and particles outside.

In the gas generator for the air bag, the hot gas and the particles discharged from the initiator in this manner ignite a solid gas generating agent to generate a gas for inflating the air bag, and in the seat belt pretensioner, the hot gas and the particles move a piston so as to retract a seat belt. Accordingly, in order to securely operate the safety devices, it is important that the initiator is securely activated.

Accordingly, in the conventional art, there has been proposed various kinds of initiators for providing an electric initiator with a high reliability and a low cost. For example, in an electric initiator disclosed in JP-A No. 9-504599, for the purpose of solving the above problems, it is attempted to improve a reliability of the initiator by selecting the structure of the pin, the structure of mounting the pin to the header, the structure of mounting the header to the cup, the structure of mounting the resistance body to the pin, the structure of the resistance body, the outputting charge and the primer.

However, in the initiator assemblies (electrical type initiator) which have been previously proposed, there is still room for improvement in a view of securing a sufficient reliability in operation and facility in manufacturing.

Further, since the conventional initiator assembly (electric type initiator) is formed by combining a lot of parts, the steps in a manufacturing process are necessarily increased, and thereby a manufacturing cost is increased. Further, since many steps in a manufacturing processes are required, a possibility such that defective products may be produced also becomes high.

The conventional molded member in the initiator assembly is made of a resin material, and a nylon 6 is used as the resin material. However, in the header made of the nylon 6, a priming (explosives) is moisture-absorbed and deteriorated due to permeation of a moisture, and there may be a possibility such that the initial performance of the initiator can not be obtained due to the use for many years under some environment.

In the conventional initiator assembly, since the conductive pin constituting the electric type initiator is held by the molded member made of a resin material, the initiator assembly is exposed to a high temperature, and when the resin portion is melted, there is a possibility that the conductive pin can not be reliably held.

### Disclosure of the Invention

Under such circumstances, the present invention provides an initiator assembly capable of reducing the number of parts constituting the initiator assembly, and capable of facilitating the manufacture of the constituting parts themselves. Such an initiator assembly should not increase the manufacturing cost of the initiator assembly and operational reliability must be secured.

The present invention also provides an initiator assembly which can maintain the initial performance even if the initiator assembly is used for a long term in a state in which a priming (explosives) is not moisture-absorbed or deteriorated by permeation of moisture.

The present invention also provides an initiator assembly capable of reliably holding the conductive pin even if the initiator assembly is exposed to a high temperature.

The above problems can be solved by an initiator assembly of the present invention having the following features.

That is, the present invention provides an initiator assembly comprising an electric type initiator and a metal collar for holding the electric type initiator, wherein
the electric type initiator comprises a molded member made of an insulating material, and a pair of conductive pins disposed to pass through the molded member, a pair of the conductive pins are disposed such that head portions of the conductive pins existing at one axial end thereof are exposed from the molded member and that the other axial end of the conductive pins project from the molded member, the head portions are electrically insulated from each other but integral with each other,
the metal collar is formed with an inward flange-like portion for holding the molded member of the electric type initiator, and
the head portions of the conductive pins are integral with each other and a disk in shape as a whole.

In the electric type initiator of the initiator assembly according to the present invention, an amount of change in a conductive resistance between a pair of the conductive pins after standing for 1000 hours in a state of flowing an electric current of 50 mA to the bridge wire at the temperature of 80°C under the humidity of 95% is within ±0.2 Ω before standing, preferably within ±0.1 Ω, and more preferably within ±0.05 Ω. Further, an ignition starting time of the priming in this case is set to be not later than 2 msec after applying an ignition electric current for starting an activation of the electric type initiator. The ignition electric current is selected among 0.8A, 1.2A or the range between 0.8 and 1.2A.

In the present invention, the resin material is preferably used as an insulating material to form the molded member, however, a glass material or a ceramic material can also be used.

In the molded portion formed from, for example, a resin material as the insulating material, it is desirable that bubbles formed in the molded portion may provide the maximum distance of 0.10 mm or less between the conductive pin and the insulating material in the radial direction. That is, the bubbles, formed on the contacting surface of the conductive pin inside the molded portion, may preferably have a largeness of 0.10 mm or less, more preferably 0.05 mm or less, from the conductive pin in the radial direction of the molded portion. Further, in the molded portion formed from the insulating material, desirably, the bubbles generated on the contacting surface between the molded portion and the respective conductive pins do not go through along the axial direction of the molded portion.

Further, in the electric type initiator of the initiator assembly according to the present invention, a moisture-proofing means can be provided between the conductive pin and the molded portion. The moisture proofing means described above can be realized by concave and convex surfaces or the like formed in the peripheral direction on part within the molded portion of the conductive pin.

The molded portion closing an end surface of a cavity storing the priming holds a conductive pin for transmitting an electric energy to the bridge wire.

The electric initiator of the initiator assembly described above can be formed, for example, by making two conductive pins go through the molded portion and having the end portions thereof exposed on the end surface of the molded portion. And the end portions of the conductive pins are connected to each other by the bridge wire so as to be conductive, and the priming is press-loaded to be in contact with the bridge wire.

This bridge wire can be formed using the electric resistance body or can be provided by a printed wiring board as well as an electric circuit substrate. Thus, the bridge wire of this specification includes another printed circuit of electric resistance wire, and a connection means that two or more members can be connected to each other.

In the case that the cap member formed in a cylindrical body with a top forming a cavity for storing the priming comprises a cylindrical charge holder and a circular cover member closing a front end of the charge holder, the press-loading of the priming can be performed by mounting the charge holder to the molded portion, press-loading the priming in the inner space thereof (inside the cavity), connecting the cover member to an open end of the charge holder, and closing the cavity in which the priming is stored. Due to the conductive pin receiving an electric signal, the bridge wire generates a heat to ignite and burn the priming, and the flame thereof breaks the container forming the cavity storing the priming and is discharged to the periphery.

In the electric type initiator described above, not only a thermoplastic resin but also a thermosetting resin can be employed as the resin material to form the molded portion closing the end surface of the cavity storing the priming as well as holding the conductive pin. In this case, it is desirable to use the resin material in which a coefficient of water absorption after being submerged for 24 hours at 23 °C is between 0.005 and 1.0 % and a tensile strength is between 100 and 250 MPa. The coefficient of water absorption (after being submerged for 24 hours at 23 °C) of the resin material to form the molded portion is more preferably between 0.01 and 0.5 %, and further preferably between 0.01 and 0.1 %. Further, with respect to the tensile strength of the resin material, it is more preferably between 160 and 250 MPa and further preferably between 170 and 230 MPa.

Further, as for the insulating material forming the molded portion, the material in which a coefficient of linear expansion is not more than 8 x 10⁻⁵/°C, the tensile strength is not less than 100 MPa and a dielectric breakdown voltage is not less than 10 MV/m is preferably used. The tensile strength of the insulating material described above is particularly desired to be not less than 170 MPa and preferable to be not more than 250 MPa. Accordingly, the tensile strength is preferable to be not less than 100 MPa but not more than 250 MPa, and particularly preferable to be not less than 170 MPa but not more than 250 MPa. Further, in the case of using the resin material as the insulating material, there is preferably used the material in which the coefficient of water absorption after being submerged for 24 hours at 23 °C is between 0.005 and 3.0 %.

As the resin material described above, the thermoplastic resin or the thermosetting resin is preferable, and the resin further containing a glass fiber or another inorganic charging material is preferable.

As the thermoplastic material, it is possible to use a polybutylene terephthalate (PBT), a polyphenylene sulfide (PPS) or a liquid crystal polymer (LCP) containing an inorganic charging material such as a mineral. At a time of using the above resin, it is preferable to contain 20 to 80 weight % of a glass fiber in the polybutylene terephthalate (PBT), contain 20 to 80 weight % of a glass fiber in the polyphenylene sulfide (PPS), and contain 20 to 80 weight % of a mineral in the liquid crystal polymer (LCP). In particular, in the case of using a glass reinforced resin containing the glass fiber, an orientation of the glass fiber is desirably adjusted so as to be along the extending direction of the conductive pin inserted to the molded portion. Further, a percentage content of the inorganic charging material in each of the resin material is more preferably between 30 and 50 weight %.

As the thermosetting resin, an unsaturated polyester is preferable.

The electric type initiator formed by using the resin material as the insulating material can be easily manufactured and also restrict the manufacturing cost in comparison with the case of being formed with using the metal. Further, in the case of forming the molded portion with using the resin material described above, and thereby it is possible to avoid, as perfectly as possible, such a circumstance that the moisture enters the molded portion and reaches the priming and the priming absorbs the moisture to be deteriorated. That is, if the molded portion described above is used, the initial initiator performance can be obtained even after being disposed for a long period of time under the environment in the motor vehicle or the like. In particular, in the case of using the polyphenylene sulfide (PPS) containing the charging material or the liquid crystal polymer (LCP), an injection molding can be performed and a high productivity and a low cost can be achieved, which is desirable.

In the above initiator assembly, the initiator assembly capable of reliably holding the conductive pin even if the initiator assembly is exposed to a high temperature can be realized by providing the metal collar with a supporting portion which prevents the integral head portions of the conductive pins from passing through a central opening of the flange-like portion. If a thickness of the head portions of the conductive pins which are integral with each other and a disk in shape is set to 0.5 to 2 mm, it is possible to facilitate the manufacture and prevent the conductive pin from being damaged.

In the present invention, the following initiator assembly can be made.

That is, an initiator assembly comprising an electric type initiator and a metal collar for holding the electric type initiator, wherein
the electric type initiator comprises a molded member made of insulating material, and a pair of conductive pins disposed to pass through the molded member, a pair of the conductive pins are disposed such that head portions of the conductive pins existing at one axial end are exposed from the molded member and the other axial end of the conductive pins project from the molded member, the head portions are electrically insulated from each other but integral with each other,
the metal collar is formed with an inward flange-like portion for holding the molded member of the electric type initiator, and a supporting portion for preventing the eyelet of the integral conductive pins from passing through the central opening of the flange-like portion, and
the head portions of the conductive pins are integral with each other and a disk in shape as a whole, and a thickness of the disk-shaped head portion is 0.5 to 2 mm.

In the above initiator assembly, the head portion existing one end of either of the conductive pins is formed into a disk in shape, the disk-shaped head portion is provided with a through hole in its thickness direction, the other conductive pin is disposed in the through hole, and an insulating material such as glass can be charged between the head portions of the other conductive pin disposed in through hole and the one conductive pin. In this case, the head portion of the one conductive pin can be formed as a separate member, and the separate head portion can be regarded as an eyelet by combination with the insulating material such as glass.

The above problem can also be solved by the following invention.

That is, an initiator assembly comprising an electric type initiator and a metal collar for holding the electric type initiator, wherein
the electric type initiator comprises a molded member made of an insulating material, a pair of conductive pins disposed to pass through the molded member, and an eyelet for electrically insulating the conductive pins from each other but integrally forming the conductive pins,
the metal collar is formed with an inward flange-like portion for holding the molded member of the electric type initiator, and
the eyelet of the electric type initiator includes a disk-shaped metal portion.

In this initiator assembly also, the initiator assembly capable of reliably holding the conductive pins even if the initiator assembly is exposed to a high temperature can be realized by providing the metal collar with the supporting portion which prevents the integral head portions of the conductive pins from passing through the central opening of the flange-like portion. If the thickness of the metal portion of the eyelet is set to 0.5 to 2 mm, it is possible to facilitate the manufacture of the initiator assembly and the initiator assembly can be prevented from being damaged. In this invention, when a resin material is used as the insulating material forming the molded member, an electrically insulative resin material is used unless another electrically insulating means is provided between the conductive pins. That is, when the molded member is made of an electrically insulative resin material, it is possible to hold the conductive pins without providing any means, but if the molded member is made of the electrically conductive resin material, it is necessary to provide a well known insulative means such as interposing an insulating material so that the conductive pins, or the conductive pin and the metal collar are not electrically connected to each other through the molded member. Therefore, when the molded member is made of a resin material, the electrically insulative resin material is desirably used. As the resin material, a glass fiber, polyphenylene sulfide (PPS) having inorganic charging material, or liquid crystal polymer (LCP) having inorganic charging material such as mineral can be used.

The eyelet electrically insulates a pair of the conductive pins which function as conductor and integrally forms the conductive pins. In order to electrically insulate a pair of the conductive pins from each other, the current-carrying paths of the conductive pins can be electrically insulated from each other using an insulating material such as a glass. The combination of the eyelet and the conductive pin electrically connects the one conductive pin, for example, to the disk-shaped metal portion made of conductive metal, disposes the other conductive pin in the through hole which passes through the metal portion in its thickness direction, charges the insulating material such as a glass into the through hole, and can hold the other conductive pin. With this, the one conductive pin and the other conductive pin are integrally formed together by the eyelet, and both the conductive pins are electrically insulated from each other by the insulating material in the through hole. In this case, the eyelet comprises the metal portion and the insulating material charged into the through hole of the metal portion. The metal portion of the eyelet can be regarded as a head portion of the one conductive pin.

A thickness of the metal portion of the eyelet (or head portion of the conductive pin, the same is applied hereinafter) is set to 0.5 to 2 mm, preferably 0.8 to 1. 7 mm. If the thickness of the metal portion is 2 mm or less, the metal portion can be formed by press-molding. As a result, the metal portion and thus, the eyelet can be manufactured more easily, and the manufacturing cost can be reduced. By setting the thickness of the metal portion to 0.5 mm or more, even if the metal portion is formed by press-molding, the metal portion can reliably be polished thereafter. Further, when the thickness of the metal portion is set to 0.5 mm or more, even if the conductive pins are insulated from each other using a glass as the insulating material, a thickness of the glass can be set to 0.5 mm or more also, so that sufficient strength can be secured. That is, in the eyelet including the glass, an interface between the glass portion and the metal portion is the weakest portion, and if the thickness of the metal portion is set to 0.5 mm or more, the thickness of the glass portion can also be set to 0.5 mm or more and as a result, the eyelet can withstand up to pressure of 250 kg/cm². Therefore, if the thickness of the metal portion of the eyelet is set to 0.5 mm or more, even if the priming is burnt, for example, in a state in which the molded portion is melted, the eyelet is prevented from being damaged, and the damaged eyelet and the conductive pin are prevented from falling out.

The metal collar holds the electric type initiator and fixes the same to the gas generator and the like. The metal collar in the initiator assembly at least includes an inward flange-like portion, and a supporting portion which prevents the eyelet from passing through the central opening of the flange-like portion. The metal collar and the electric type initiator are coupled to each other by holding the molded member of the electric type initiator by means of the flange-like portion.

Even if the resin constituting the molded member is melted by heat and the eyelet is moved, the supporting portion provided on the metal collar can support the eyelet so that the eyelet does not pass through the central opening of the flange-like portion. That is, in the initiator assembly having such a supporting portion, the molded member is formed using the thermoplastic resin as the insulating material, and even if it is exposed to a high temperature, the projection prevents the molded member and the conductive pin fixed thereto from falling out and thus, the safety of the initiator assembly can be enhanced.

The supporting portion can be realized by forming an inner diameter of the central opening of the flange-like portion smaller than an outer diameter of the eyelet. In this case, the inner diameter of the central opening of the flange-like portion only needs to be smaller than the outer diameter of the eyelet at least part thereof and for example, the central opening may be formed with a projection which projects radially and inwardly, or the central opening may be formed into an oval shape, a rectangular shape or various polygonal shapes. The supporting portion having such a shape supports the eyelet by a portion of the central opening whose inner diameter is reduced (supporting portion), and this can prevents the eyelet from passing through the central opening of the flange-like portion.

Thus, a projection which projects radially towards the inside of the flange-like portion is formed on the inner peripheral surface of the flange-like portion, and this projection may be defined as the supporting portion. For example, projections are continuously or discontinuously formed on the inner peripheral surface of the flange-like portion circumferentially, and these can be defined as the projections, or the projection can be formed by reducing the inner diameter of the flange-like portion from its opposite ends in its thickness direction toward radially inside of the flange-like portion. In the latter case, the inner peripheral surface of the flange-like portion can be projected radially and inwardly while gradually inclining, and the entire portion can be defined as the projection.

If the projection is provided on the inner peripheral surface of the flange-like portion, it is possible to prevent the molded member from falling out from the metal collar with a simple structure. That is, when the molded member is formed by injection-molding, the resin injected between the flange-like portions is hardened in a shape which complementarily coincides with the projection, and a molded member having a shape receiving the projection can be formed by the hardening of the resin. As a result, the molded member is supported also by the projection, and it is possible to prevent the molded member from falling out from the flange-like portions. Thus, if the projection is previously formed on the inner peripheral surface of the flange-like portion and the molded member is formed by the injection-molding, it is possible to prevent the electric type initiator from falling out from the metal collar and to reliably connect both the members to each other without need of further working.

Thus, in the present invention, if the projection is formed on the inner peripheral surface of the flange-like portion and this is defined as the supporting portion, the initiator assembly has a function for preventing the eyelet from passing, and a function for supporting the molded member, which is preferable.

In relation to the above initiator assembly, an initiator assembly capable of reducing the number of constituent parts and facilitating the manufacturing of the constituent parts themselves can be realized by the following structure.

That is, the present invention also provides an initiator assembly comprising an electric type initiator and a metal collar for holding the electric type initiator, wherein the electric type initiator comprises a molded member made of an insulating material, the metal collar includes an inward flange-like portion for holding the molded member of the electric type initiator, an inner peripheral surface of the flange-like portion is formed with a projection projecting radially and inwardly of the flange-like portion, and the molded member receives the projection. As the insulating material forming the molded member, a thermosetting resin or a thermoplastic resin can be used.

In the above initiator assembly, the effect obtained by forming the projection on the inner peripheral surface of the flange-like portion is as described above and thus, explanation thereof will be omitted here.

In the initiator assembly, it is preferable to form the inner periphery of the cylindrical portion integrally connected to the outer periphery of the flange-like portion in the metal collar is not covered with the insulating material and the metal collar is exposed. With this, it is possible to prevent the connector received by the inner periphery of the cylindrical portion from falling out by a reaction caused when the initiator assembly is activated.

In the initiator assembly, the molded member is fixed by the inner peripheral surface of the flange-like portion and the molded member is prevented from falling out by the projection. Therefore, a lower end surface of the flange-like portion, i.e., a surface thereof in which the connector is received without being covered with a resin. In this regard, in the conventional initiator assembly, a lower end surface of the flange-like portion is also covered with a resin to prevent the molded member from falling out, and according to the initiator assembly of the present invention, the insulating material can be reduced, it is possible to prevent the connector from falling out and thus, this is preferable to reduce the manufacturing cost and secure the reliability of operation.

By the structure of combining the molded member of the initiator assembly and the charge holder forming the cavity which accommodates the priming, it is possible to realize an initiator assembly capable of reliably holding the priming while reducing the manufacturing cost.

That is, an initiator assembly comprising an electric type initiator and a metal collar for holding the electric type initiator, wherein the electric type initiator comprises a molded member made of a insulating material, a charge holder which is coupled to the molded member to form a cavity, and a priming charged into the cavity, a coupled portion between the molded member and the charge holder in the cavity is formed with a groove which spreads radially and outwardly, and the groove is provided between the molded member and the charge holder.

The groove can be formed as a gap provided between a bottom surface of a notched portion and the end surface of the circular portion in such a manner that the charge holder is annularly formed, the notched portion formed by notching an inner peripheral surface of the charge holder in its one opening end, the circular portion provided on the molded member is fitted into the notched portion. That is, this gap can be defined as the groove. If the groove is formed in this manner, it is unnecessary to form the groove in the inner peripheral surface of the charge holder, and thereby, it is possible to simplify the manufacturing process, and to make it facilitate to manufacture the initiator assembly, and to reduce the cost. Especially, if the charge holder is made of a resin, it is easy to form the notched portion. This groove prevents ignition failure which may be caused because the priming charged in the cavity under pressure is away from the bridge wire. That is, the priming is not always charged into the entire cavity under pressure, a charging amount of the priming is adjusted because of output or the like and a space is formed in the cavity in some cases. In such a case, although the priming is charged under pressure, the priming moves toward the space, contact between the priming and the bridge wire is released, and ignition failure may be caused. Thereupon, if the groove is formed in the range where the priming is charged under pressure, the priming charged under pressure enters the groove, and the priming in the cavity is prevented from moving, and reliably ignition is secured.

As the insulating material forming the molded member in this initiator assembly, a thermosetting resin or a thermoplastic resin can be used, but it is preferable to use particularly the thermoplastic resin in view of advantage of manufacture. This is because that if the molded member and the charge holder are made of a thermoplastic resin, both the members can be bonded to each other by ultrasonic welding and as a result, it is possible to shorten the time required for welding, no solvent, no heat source, and no adhesive are required, so that there is no danger of fire or poisoning and the initiator assembly can be manufactured with inexpensive equipment.

The above initiator assembly can form a gas generator for an air bag by accommodating the initiator assembly in a housing having a gas discharging port together with a gas generating means which is burned and/or inflated by activation of the initiator assembly to generate a working gas. The gas generator for an air bag is accommodated in a module case together with the air bag (bag body) which introduces a gas generated by the gas generator to inflate, thereby forming an air bag apparatus. In the air bag apparatus, the gas generator is activated when an impact sensor senses the impact, and a combustion gas is discharged from the gas discharging port of the housing. The combustion gas flows into the air bag and with this, the air bag ruptures the module cover and expands, and forms a cushion between a hard structure in the vehicle and a passenger for absorbing the impact.

According to the present invention, it is possible to reduce the number of parts constituting the initiator assembly, and to enhance the facilitation of the manufacture of the constituting parts themselves without increasing the manufacturing cost of the initiator assembly while securing the operational reliability. When the molded member is formed with the insulating material according to the present invention, there can be realized the initiator assembly capable of maintaining the initial performance even if the initiator assembly is used for a long term in as state in which the priming (explosives) is not moisture-absorbed or deteriorated by permeation of a moisture.

Further, according to the initiator assembly of the invention, it is possible to have an initiator assembly capable of reliably holding the conductive pin even if the initiator assembly is exposed to a high temperature.

### Brief Description of the Drawings

Fig. 1 is a vertical cross sectional view showing an initiator assembly of the present invention.
Fig. 2 is a vertical cross sectional view showing an initiator assembly of other embodiment.
Fig. 3 is an enlarged view of a substantial portion of the initiator assembly shown in Fig. 2.
Figs. 4 are horizontal cross sectional views showing a shape of a projection in other embodiment.
Figs. 5 show manufacturing steps of the initiator assembly shown in Fig. 1.
Fig. 6 is a vertical cross sectional view showing a gas generator for an air bag of the present invention.
Fig. 7 is a vertical cross sectional view showing other gas generator for an air bag of the present invention.
Fig. 8 is a vertical cross sectional view showing other gas generator for an air bag of the present invention.

### Explanation of Reference Numerals

- 1, 403: molded member
- 2, 402: conductive pin
- 3, 407: bridge wire
- 7, 406: priming
- 8, 414: eyelet
- 11, 421: groove
- 13, 401: metal collar
- 20: cup member
- 22: gas generating agent
- 100: initiator assembly
- 103: housing
- 404: base portion
- 408: flange-like portion
- 413: projection
- 415: through hole

### Preferred Embodiments of the Invention

A gas generator for an air bag of the present invention will be explained below based on the embodiments shown in the drawings.

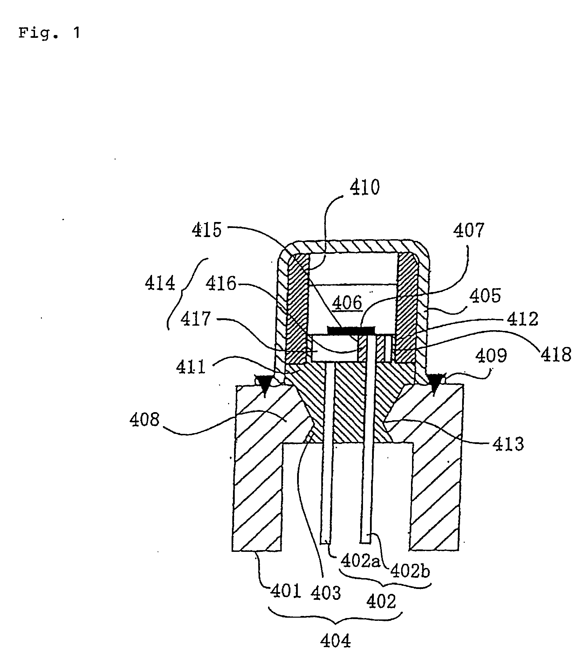

Fig. 1 is a vertical cross sectional view showing a preferred embodiment of the initiator assembly of the present invention.

The initiator assembly shown in Fig. 1 comprises a metal collar 401 having a flange-like portion 408, and an electric type initiator held by the metal collar. The electric type initiator comprises a molded member 403 using a resin material as an insulating material, an eyelet 414 which is exposed at an end portion of the molded member, and a pair of conductive pins 402 which are electrically insulated by the eyelet but integrally held by the molded member.

Especially in the present embodiment, as a resin material forming a molded portion, there is used a glass fiber, a polyphenylene sulfide (PPS) including other inorganic charging materials, or a resin material such as liquid crystal polymer (LCP) including inorganic charging material such as a mineral. The polyphenylene sulfide (PPS) including 40 weight % of a glass fiber has dielectric breakdown voltage of 12 MV/m. The liquid crystal polymer (LCP) including 50 weight % of a mineral has dielectric breakdown voltage of 66 MV/m. The polyphenylene sulfide including 40 weight % of a glass fiber has coefficient of water absorption of 0.015% after being submerged for 24 hours at 23°C and has a tensile strength of 196 MPa. The liquid crystal polymer including 50 weight % of mineral has coefficient of water absorption of 0.04% after being submerged for 24 hours at 23°C, and tensile strength of 171 MPa.

When this initiator assembly is manufactured, conductive pins 402 integrally formed by the eyelet 414 are disposed in the flange-like portion 408 of the metal collar 401, a resin material to be a molded member 403 is injection-molded between both the members 408 and 402, and the metal collar 401 and the conductive pins 402 integrally formed by the eyelet 414 are integrally formed. In this manner, a base portion 404 of the initiator assembly is formed by the metal collar 401, the conductive pins 402 integrally formed by the eyelet 414 and the molded member 403.

In the initiator assembly shown in the present embodiment, a charge holder 410 is used for disposing a priming 406, a cylindrical cover member 405 with a top is formed at its opening edge with a flange 409, and the flange 409 is connected to a base portion 404 (more specifically, to a flange-like portion 408 of the metal collar 401).

In the present embodiment, the eyelet 414 comprises a disk-shaped metal portion 417 made of a conductive metal. The metal portion 417 is formed with one through-hole 415 passing through the metal portion 417 in its thickness direction. One of the conductive pins 402a is formed integrally on the eyelet 414 in a conductive state, and the other conductive pin 402b passes through the through hole 415 and is held in the through hole 415 by an insulating material (glass) 416 charged into the through hole. Both the conductive pins 402a and 402b are electrically insulated from each other by the insulating material (glass) 416. In this case, the metal portion 417 of the eyelet 414 may be regarded as a head portion of the conductive pin 402a, and both the conductive pins 402a and 402b may be integral with each other but their heads are electrically insulated from each other. The insulating material (glass) is provided between the head portions of the conductive pins. The head portions of the conductive pins are formed at one end thereof in its axial direction to which the priming is press-charged, and the axial other end of the conductive pins project from the molded member 403. A connector for transmitting an operation signal is connected to the other end portion.

A thickness of the metal portion 417 of the eyelet (or the head portion of the conductive pin, the same is applied hereinafter) 414 is set to 0.5 to 2 mm, more preferably to 0.8 to 1.7 mm. With this, the eyelet 414 can be formed by press-molding, and sufficient strength between the glass portion (416) and the metal portion 417 can be secured.

An end surface of the eyelet 414 is exposed from the base portion 404 (more specifically, from the molded member 403). The bridge wire 407 is provided between the conductive pin 402b in the through hole 415 and the metal portion 417. The bridge wire 407 is made of electrically resistance body, and converts electric energy (operation signal) received by the conductive pin 402 into thermal energy.

The molded member 403 which is formed by injection-molding the resin material is formed with a cylindrical portion 411 which projects more outwardly in the axial direction than the flange-like portion 408 of the metal collar 401. A tip end of the cylindrical portion 411 is formed with a circular portion 412 circularly projecting. The circular portion 412 is fitted into a substantially cylindrical charge holder 410 made of a resin material. The circular portion 412 and the charge holder 410 form a cavity. The priming 406 is charged into the cavity under pressure.

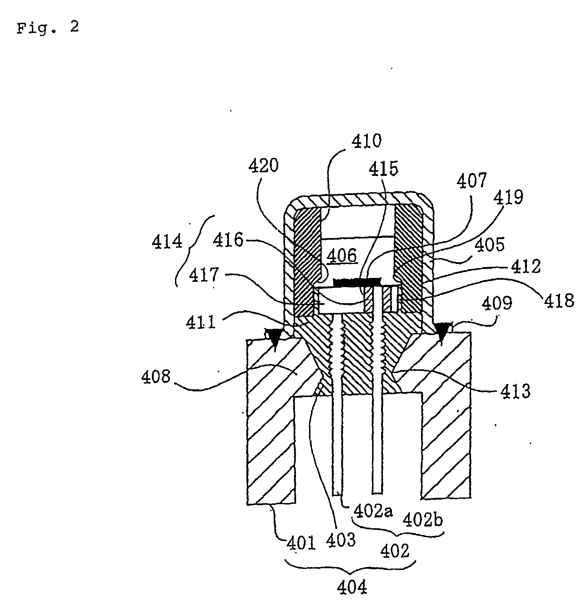

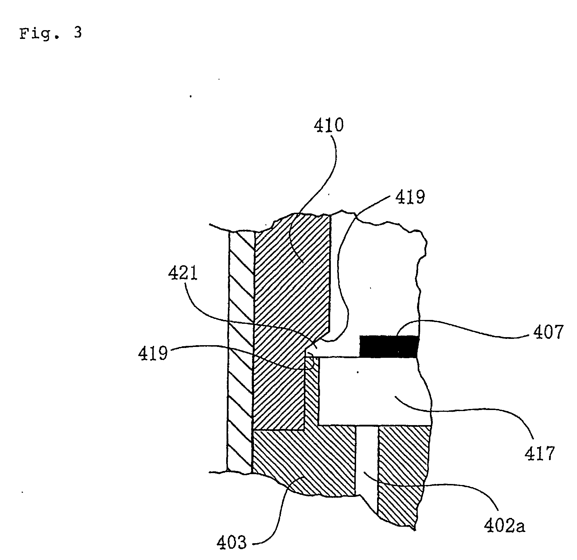

When the molded member 403 and the charge holder 410 are combined with each other, as shown in the vertical cross sectional view of the initiator assembly shown in Fig. 2 and the cross sectional view of a substantial portion of an essential portion in Fig. 3, the charge holder 410 may be formed into a cylindrical shape, an inner periphery of one end opening of the charge holder 410 may be formed with a notch portion 419 which is notched into a stepped notch, and the circular portion 412 of the molded member may be fitted into the notch 419. In this case, a groove 421 is formed between the bottom surface 420 of the stepped-notch and an end surface of the circular portion 412 along an inner peripheral surface of the charge holder 410 . If the priming 406 is charged into the cavity formed in this manner under pressure, the priming is also charged into the groove 421 and pressed and solidified and is supported in the groove 421. Therefore, even if a space exists in the cavity, it is possible to prevent the priming 406 from falling and moving. As a result, ignition performance of the priming 406 is enhanced. With this design, the groove 421 can easily be provided, and this is advantageous in manufacture and cost.

The cavity into which the priming 406 is charged under pressure is covered with the cylindrical cover member 405 with a top, and the cover member 405 is connected to the base portion 404. The eyelet 414 is disposed in a circular portion 418 of the molded member 403.

In the present embodiment, the charge holder 410 and the molded member 403 are made of a resin and are welded to each other by ultrasonic welding. By welding both the members 410 and 403 by the ultrasonic welding, the melted molded member 403 (resin) does not touch the conductive pin, and it is possible to prevent the bridge wire 407 provided between the conductive pins 402a and 402b from being cut. When both the members 410 and 403 are bonded to each other by the ultrasonic welding, it is preferable to make the charge holder 410 and the molded member 403 of a thermoplastic resin.

In the integrally formed base portion 404, a falling-out preventing means for preventing the molded member 403 from falling and/or coming out is formed on the joint portion between the metal collar 401 and the molded member 403. In the present embodiment, a projection 413 is formed on an inner peripheral surface of the flange-like portion 408 of the metal collar 401 as the falling-out preventing means, a resin material is charged in correspondence with the projection 413, and the molded member 403 for receiving the projection 413 is formed. In the present embodiment, the projection 413 is formed such that an inner diameter of an inner peripheral surface of the flange-like portion 408 is narrowed radially towards the inside of the flange-like portion from the opposite end surfaces of the flange-like portion in its thickness direction.

Since the resin material is formed by injection-molding at a central opening of the flange-like portion formed as described above, the molded member 403 is formed to be engaged complementarily with the inner peripheral surface of the flange-like portion 408. If the molded member receives the projection 413 on the inner peripheral surface of the flange-like portion, it is possible to prevent the molded member 403 from falling out and/or coming out from the metal collar 401.

Especially in the present embodiment, a top portion of the projection 413 formed on the inner peripheral surface of the flange-like portion 408 of the metal collar 401 is formed closer to the lower portion of the flange-like portion 408. With this, a portion of the molded member 403 higher than the top portion of the metal collar 401 (i.e., in a portion in the priming 406 side) has a sufficient length in its axial direction, and sufficient shearing strength in the axial direction is secured. With this, even after the priming 406 is ignited and burnt, the molded member 403 is reliably held by the metal collar 401. That is, in order to obtain shearing strength at the smallest radius portion of the molded member 403, this portion is formed at the lower portion.

Further, the projection 413 is formed into such a size that the eyelet 414 is blocked not to pass therethrough. More specifically, in the present embodiment, an inner diameter of the projection 413 is set smaller than an outer diameter of the eyelet 414. As a result, even if the molded member 403 is melted by heat and the eyelet 414 is moved, since the eyelet 414 is supported by the projection 413, the eyelet 414 never comes out from the initiator assembly.

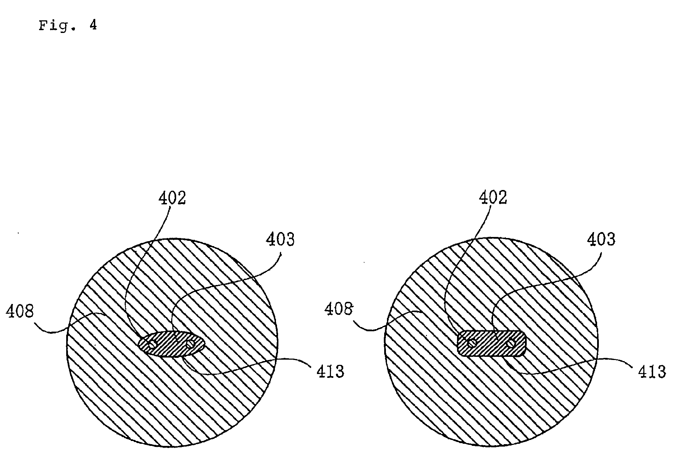

When the projection is formed, the projection may be formed to project circularly from the inner peripheral surface of the flange-like portion, or may project into various oval shapes as shown in Fig. 4. In this case, the conductive pins 402a and 402b pass through the projection 413 which projects in the oval shape.

In the initiator assembly shown in Fig. 1 also, like the initiator assembly shown in Fig. 2, a knurl can be formed on the conductive pins 402a and 402b in the range where the pins exist in the molded member 403. The knurl is formed as concave and convex surfaces, a rib or a boss formed in the peripheral direction of the conductive pin 402, and blocks entering of the moisture between the conductive pin 402 and the molded portion 403, thereby making the assembly of both members secure. In other words, the insulating material is molded corresponding to the concave and cones surfaces, the rib or the boss by forming the concave and convex surfaces, the rib or the boss in the range where the conductive pins 402a and 402b exist in the molded portion and charging the insulating material between the conductive pins 402a and 402b and the metal collar 401, and thereby, both members are joined securely. However, the knurl can be omitted as shown in Fig. 1, in view of easiness of the manufacturing.

As described above, the priming 406 charged in the cavity is separated from the ambient air by the periphery thereof being surrounded by the cover member 405 formed in the cylindrical shape with the top. In most cases, the cover member 405 is made of a metal material, and a thickness thereof is adjusted so as to be broken due to a combustion of the priming 406. Accordingly, it is preferable that the cover member 405 has a notch in a circular end portion (a portion forming a top) in such a manner as to be easily and securely broken. The notch described above can be formed radially as a groove of about 0.10 to 0.25 mm in the case of making the cover member 305 of a stainless steel (SUS305).

In the initiator assembly shown in this aspect, the flange 409 is formed in an opening bottom edge of the cover member 405 and the flange 409 is joined to the collar member 401 (the flange-like portion 408) constituting the base portion 404. The cover member 405 and the metal collar 401 are joined by a welding method with a small heat gain such as a resistance welding, a laser welding in order to clear the possibility such that the priming 406 is ignited at a time of joining.

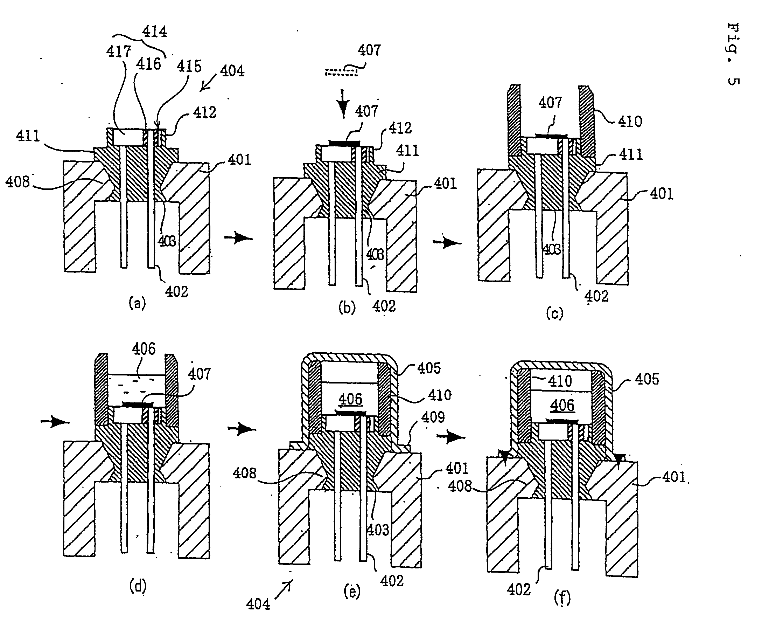

The initiator assembly described above can be manufactured in accordance with a process shown in Fig. 5. That is, as shown in (a) of Fig. 5, two conductive pins 402 are inserted from an opening of the flange-like portion 408 of the metal collar 401, and the resin material is charged between the opening portion of the flange-like portion 408 and the conductive pins 402a and 402b, whereby the base portion 404 is formed. At a time of forming the base portion 404, the insulating material is injection-molded so that the molded portion 403 made thereof protrudes outwardly in the axial direction (a protrusion 411) from the flange-like portion 408 of the metal collar 401, and an end surface of the eyelet 414 is formed to expose at end surface of the circular portion 412 circularly protruding further than the protrusion. Then, after polishing the base portion 404, the bridge wire 407 bridges between the metal portion 417 of the eyelet 414 which exposes the head portion from the end surface of the molded member 403 and the conductive pins 402 in the through-holes (in (b) of Fig. 5). Further, the charge holder 410 is mounted onto the circular portion 418 of the molded member 403 protruding outwardly in the axial direction from the flange-like portion 408 of the metal collar 401, and joined by an ultrasonic welding (in (c) of Fig. 5).

Thereafter, the priming 406 is press-loaded inside a cavity (a priming storing space) formed by the circular portion 418 and the charge holder 410 (in (d) of Fig. 5), the outside of the charge holder 410 is covered with the cover member 405 formed in the cylindrical shape with the top, and the interior of the cavity where the priming 306 is stored is closed (in (e) of Fig. 5).Since the opening bottom edge of the cover member 405 is formed in a shape like a flange, this portion 409 is welded to the flange-like portion 408 of the base portion 404 (the metal collar 401) (in (f) of Fig. 5). It is desirable that the flange-like portion 409 of the cover member 405 and the flange-like portion 408 of the metal collar 401 are joined according to a welding method with a small heat gain such as a resistance welding, a laser welding.

In the initiator assembly of the present embodiment, the metal collar 401 is integrated with the conductive pins 402 which are integrated by the eyelet, with the resin material to form the base portion 404, and the initiator assembly comprises such a base portion. Therefore, the initiator assembly shown in this embodiment can be composed of inexpensive parts and the number of the manufacturing steps can be reduced, so that the initiator assembly having a less production cost can be realized. Further, since the initiator assembly can be easily assembled, it is possible to improve the yield.

### Embodiment 2

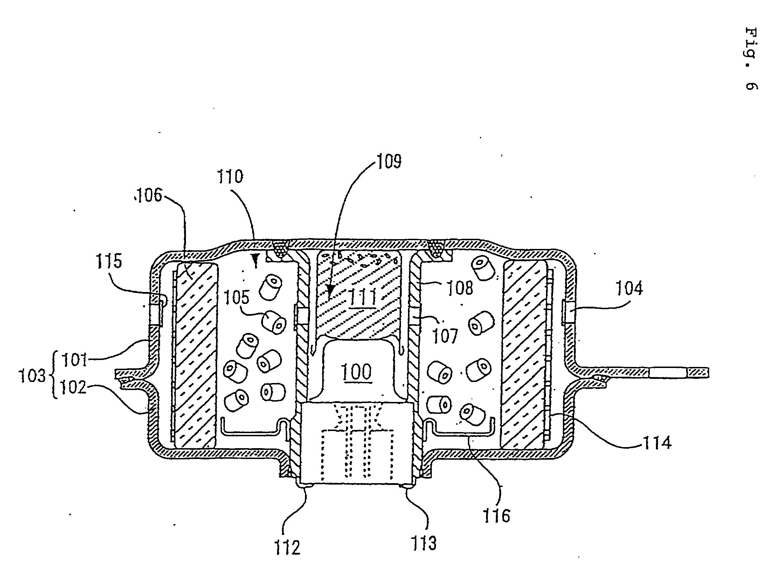

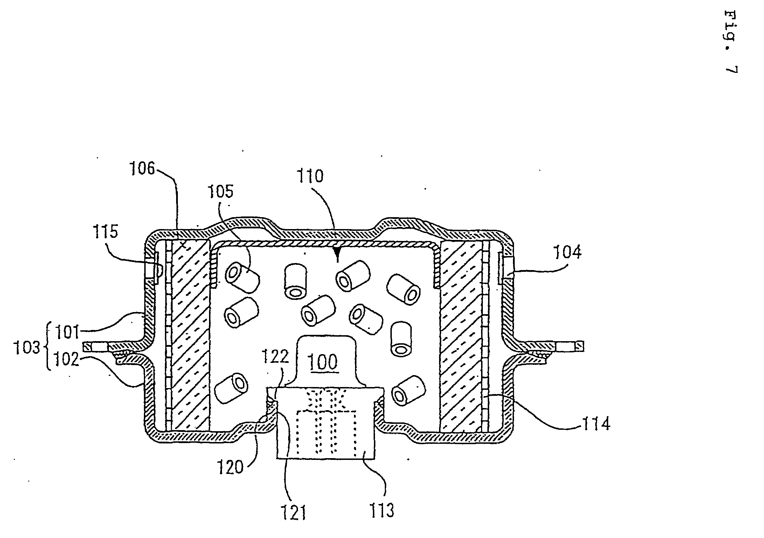

Figs. 6 and 7 show an embodiment of a gas generator for an air bag formed by using the initiator assembly described above.

In the gas generator, a housing is formed by combining a diffuser shell 101 in which a gas discharge port 104 is formed and a closure shell 102 closing the diffuser shell, and the housing 103 includes an igniting means comprising the initiator assembly 100 and a gas generating means 105 to be ignited and burnt upon activation of the igniting means for generating a working gas to inflate an air bag (a bag body), and a filter means 106 for purifying and/or cooling the working gas generated by combustion of the gas generating means 105.

In the gas generator shown in Fig. 6, an inner cylindrical member 108 provided with a plurality of flame-transferring ports 107 on a circumferential wall is arranged in the center inside the housing, a space 109 for storing the igniting means is formed inside the inner cylindrical member 108, and a combustion chamber 110 for storing the gas generating means 105 is formed in the outside thereof in the radial direction.

In the gas generator shown in Fig. 6, the igniting means comprises the initiator assembly 100 shown in the embodiments described above, and a transfer charge 111 to be ignited and burnt upon activation of the initiator assembly and ejecting a flame for igniting the gas generating means from the flame-transferring ports 107. Among these, the initiator assembly 100 is fixed to the lower portion of the inner cylindrical member 108. A combination of the inner cylindrical member 108 and the initiator assembly 100 can be obtained by crimping an end portion 112 of the opening in the inner cylindrical member 108 and fixing the collar member 113 of the initiator assembly 100. Further, in the inner cylindrical member 108, the opening end portion 112 in the side where the initiator assembly 100 is received is joined to the closure shell 102 by a welding or the like.

The gas generating means 105 is stored in the combustion chamber 110, and the filter means 106 for purifying and/or cooling the working gas generated due to the combustion of the gas generating means 105 is arranged outside the same. The filter means 106 is formed in a cylindrical shape by using a laminated wire mesh or the like, and the outer circumferential surface thereof is arranged opposite to the inner circumferential surface of the housing 103. Desirably, a gap forming a gas-flow path is formed between the outer circumferential surface of the filter means 106 and the inner circumferential surface of the housing 103, whereby the entire portion of the filter means 106 can be used. The outer circumferential surface of the filter means 106 is supported by a punching plate 114 formed in a porous cylindrical shape, thereby being suppressed expansion of the filter outwardly in the radial direction.

In the gas generator described above, when the initiator assembly 100 is activated, the transfer charge 111 arranged in the vicinity of the assembly is ignited and burnt, and the flame thereof is ejected into the combustion chamber 110 through the flame-transferring ports 107 formed in the inner cylindrical member 108. Due to the flame, the gas generating means 105 in the combustion chamber 110 is ignited and burnt to generate a working gas. The working gas is purified and/or cooled during passing through the filter means 106, breaks a seal tap 115 closing the gas discharge port 104 and is discharged from the gas discharge port 104. In this case, in Fig. 6, the reference numeral 116 denotes an under plate formed in a substantially ring shape. This under plate 116 has a function of supporting the gas generating means inside the combustion chamber 110.

Further, the initiator assembly shown described above can be also used in a gas generator shown in Fig. 7. The gas generator shown in this drawing is different from the gas generator shown in Fig. 6, and does not include an inner cylindrical member (the reference numeral 108 in Fig. 4) in the housing. Accordingly, the generator is particularly characterized by a structure of the igniting means and a method of the arranging.

That is, in the gas generator shown in this drawing, the initiator assembly 100 is directly mounted to the closure shell 102 and the gas generating means 105 is arranged in the periphery thereof. Therefore, in the gas generator shown in this drawing, the transfer charge (the reference numeral 111 in Fig. 6) is not used, and when the initiator assembly 1 is activated, the flame thereof directly ignites and burns the gas generating means 105 to generate a working gas for inflating the air bag.

In particular, in the aspect shown in this drawing, a central opening 121 provided with an inwardly bent circumferential wall portion 120 is formed in the substantially center of the closure shell forming the housing, the initiator assembly 100 is received in the central opening 121, and an end surface of the circumferential wall portion 120 in the central opening 121 and the collar member 113 of the initiator assembly 100 are connected. Both members can be connected by suitable means such as a welding to fix the collar member of the initiator assembly. By forming a stepped notch portion 122 in the collar member of the initiator assembly 100 and bringing it into contact with the end surface of the circumferential wall portion in the central opening 121 as shown in this drawing, the initiator assembly is securely fixed and a risk such that the assembly is fallen out at a time of activation can be cleared. In Fig. 7, the same reference numerals are attached to the same members as those in Fig. 6, and a description thereof will be omitted.

Further, the initiator assembly related to the above initiator assembly can then used as a constituent part for manufacturing a gas generator used for pretensioner for a seat belt.

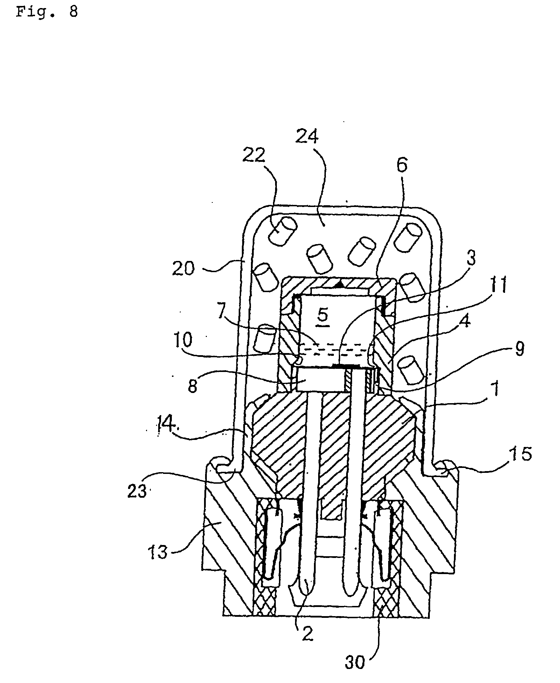

As shown in Fig. 8, this initiator assembly holds an electric type initiator at an end portion 14 formed into a pawl shape in a metal collar 13, and in the electric type initiator, a pair of conductive pins 2 which are integrally formed by an eyelet 8 are disposed in a molded member 1 made of a resin material. The conductive pins 2 can electrically discharge by a bridge wire 3 . A circular portion 9 which projects circularly is formed on the eyelet 8 side on the molded member 1, and the circular portion 9 is fitted into a stepped notch 10 of a charge holder 4. The circular portion 9 and the charge holder form a cavity 5, and a priming 7 is charged into the cavity 5 under pressure. A groove 11 is formed in the cavity 5 in the circular portion side, and the priming is held by the groove 11. The cavity 5 is closed by a cover member 6.

This gas generator for the pretensioner using the initiator assembly can employ a structure shown in Fig. 8, for example.

That is, the gas generating agent 22 to be ignited and burnt upon an activation of the initiator, more particularly by a gas, a flame, a mist or the like generated due to combustion of the priming is charged in a cup member 20 formed in a cylindrical shape with a bottom and having the opening end 23 bent in a flange-like shape. The space charged with the gas generating agent 22 is divided, as a combustion chamber, from the outer environment by the cup member. And, a sealant (a sealing member or a waterproof agent) is charged within the circular groove 15 provided in the metal collar 13, the flange-like portion 23 of the cup member 20 is fitted and inserted into the circular groove. Further, the circumferential wall of the circular groove 15 is crimped to join the initiator assembly to the cup member 20. At this time, the charge holder 4 side of the initiator assembly is press-inserted into the cup member. Particularly in the aspect shown in Fig. 8, in order to easily and securely connect a connector (not shown) for transmitting the activation signal to the gas generator, the retainer 30 is arranged. As the retainer 30, it is possible to use a known structure having a positioning function of the connector to be joined with the conductive pins 2 and having a connector-holding and fixing function.

In the gas generator for the pretensioner formed in this manner, the initiator is activated by transmitting an igniting electric current to the conductive pin 2 and a flame, a gas, a mist or the like is generated due to the combustion of the priming 7. The flame or the like ignites and burns the gas generating agent 22 stored in the chamber (the combustion chamber 24) inside the cup member 20 so as to generate a working gas. The working gas thereafter breaks the cup member 20 to be discharged outside.

## Claims

1. An initiator assembly comprising an electric type initiator and a metal collar for holding the electric type initiator, wherein
the electric type initiator comprises a molded member made of an insulating material, and a pair of conductive pins disposed to pass through the molded member, a pair of the conductive pins being disposed such that head portions of the conductive pins existing at one axial end are exposed from the molded member and the other ends of the conductive pins in their axial directions project from the molded member, and the head portions being electrically insulated from each other but integral with each other,
the metal collar is formed with an inward flange-like portion for holding the molded member of the electric type initiator, and
the head portions of the conductive pins are integral with each other and a disk in shape as a whole.

2. An initiator assembly according to claim 1, wherein the metal collar has a supporting portion for preventing the integral head portions of the conductive pins from passing through a central opening of the flange-like portion.

3. An initiator assembly according to claim 1 or 2, wherein a thickness of the head portions of the conductive pins which are electrically insulated from each other but integral with each other in a disk shape is 0.5 to 2 mm.

4. An initiator assembly according to any one of claims 1 to 3, wherein the electric type initiator includes an eyelet having a disk-shaped metal portion, the metal portion being connected to any one of the conductive pins such that the metal portion can electrically be connected to the conductive pin, and forming a head portion of the one conductive pin.

5. An initiator assembly comprising an electric type initiator and a metal collar for holding the electric type initiator, wherein
the electric type initiator comprises a molded member made of an insulating material, a pair of conductive pins disposed to pass through the molded member, and an eyelet for electrically insulating both conductive pins from each other but integrally forming the conductive pins,
the metal collar is formed with an inward flange-like portion for holding the molded member of the electric type initiator, and
the eyelet of the electric type initiator includes a disk-shaped metal portion.

6. An initiator assembly according to claim 5, wherein the metal collar includes a supporting portion for preventing the eyelet from passing through a central opening of the flange-like portion.

7. An initiator assembly according to claim 5 or 6, wherein a thickness of the metal portion of the eyelet is 0.5 to 2 mm.

8. An initiator assembly according to any one of claims 5 to 7, wherein the eyelet includes at least one through hole passing through the eyelet in its thickness direction, any one of the conductive pins passes through the through hole, and the conductive pin is electrically insulated from the other conductive pin by an insulating material charged into the through hole.

9. An initiator assembly according to any one of claims 1 to 8, wherein an inner peripheral surface of the flange-like portion is formed with a projection projecting radially towards the inside of the flange-like portion, and this projection is the supporting portion.

10. An initiator assembly according to claim 9, wherein the molded member has a portion shaped to receive the projection.

11. An initiator assembly comprising an electric type initiator and a metal collar for holding the electric type initiator, wherein
the electric type initiator comprises a molded member made of an insulating material, and the metal collar includes an inward flange-like portion for holding the molded member of the electric type initiator, an inner peripheral surface of the flange-like portion is formed with a projection projecting radially towards the inside of the flange-like portion, and the molded member receiving the projection.

12. An initiator assembly according to any one of claims 9 to 11, wherein the projection is formed such that an inner diameter of an inner peripheral surface of the flange-like portion is reduced from opposite end surfaces of the flange-like portion in its thickness direction radially toward the inside of the flange-like portion.

13. An initiator assembly according to any one of claims 1 to 12, wherein the metal collar comprises a flange-like portion which is formed into an inward flange-like shape, and a cylindrical portion which is integrally connected to an outer periphery of the flange-like portion, the inner periphery of the cylindrical portion is not covered with an insulating material and the metal collar is exposed.

14. An initiator assembly comprising an electric type initiator and a metal collar for holding the electric type initiator, wherein
the electric type initiator comprises a molded member made of an insulating material, a charge holder which is coupled to the molded member to form a cavity, and a priming charged into the cavity under pressure,
a coupled portion between the molded member and the charge holder in the cavity is formed with a groove which spreads radially and outwardly, the groove being provided between the molded member and the charge holder.

15. An initiator assembly according to claim 14, wherein the charge holder includes a notched portion which is annularly formed by notching the inner peripheral in one opening end is notched, the molded member including a circular portion fitted into the notched portion of the charge holder, and
the groove is provided between a bottom surface of the notched portion and an end surface of the circular portion.

16. An initiator assembly according to claim 14 or 15, wherein the electric type initiator includes an eyelet which electrically insulates a pair of conductive pins from each other but integrally forms the conductive pins, the eyelet is fitted into the circular portion of the molded member, and an end surface of the eyelet is exposed in the cavity side.

17. A gas generator comprising a housing which forms an outer container, an initiator assembly disposed in the housing, and a gas generating agent which is ignited and burnt upon activation of the initiator assembly, wherein the initiator assembly is one described in any one of claims 1 to 16.

18. An initiator assembly according to any one of claims 1 to 17, wherein in the electric type initiator, an amount of change in a conductive resistance between a pair of the conductive pins after standing for 1000 hours in a state of flowing an electric current of 50 mA to the bridge wire at the temperature of 80°C under the humidity of 95% is within ±0.2 Ω before standing.

19. An initiator assembly according to any one of claims 1 to 18, wherein, in the electric type initiator, an ignition starting time of the priming after standing for 1,000 hours in a state of flowing an electric current of 50 mA to a pair of conductive pins at the temperature of 80°C under the humidity of 95% is 2 msec or less after ignition current for starting the activation of the electric type initiator is applied.

20. An initiator assembly according to any one of claims 1 to 19, wherein the insulating material forming the molded member is a resin material, a glass material or a ceramic material.

21. An initiator assembly according to any one of claims 1 to 20, wherein the insulating material forming the molded member is a resin material.

22. An initiator assembly according to any one of claims 1 to 21, wherein the molded member is made of a resin material, and a maximum radial direction between the conductive pin of bubble generated in a contact surface, in the molded member, between the conductive pins and the resin is 0.10 mm or less.

23. An initiator assembly according to any one of claims 1 to 22, wherein the molded member is made of a resin material, and bubble generated in a contact surface, in the molded member, between the conductive pins does not pass axially through the molded member.

24. An initiator assembly according to any one of claims 1 to 23, wherein a moisture-proof means is provided between the conductive pin and the molded member.

25. An initiator assembly according to claim 24, wherein the moisture proofing means is concave and convex surfaces formed circumferentially on the periphery on part of the conductive pin existing inside the molded member.

26. An initiator assembly according to any one of claims 1 to 25, wherein the molded member includes a pair of the conductive pins, and is formed by injection-molding a resin material.

27. An initiator assembly according to any one of claims 1 to 26, wherein the molded member is made of a resin material, a coefficient of water absorption of the resin material after being submerged in water for 24 hours at 23°C is between 0.005 and 3.0%, and a tensile strength of the resin material is 100 to 250 MPa.

28. An initiator assembly according to any one of claims 1 to 27, wherein the molded member is made of an insulating material, a tensile strength of the insulating material is 100 MPa or higher and a dielectric breakdown voltage of the insulating material is 10 MV/m or higher.

29. An initiator assembly according to any one of claims 1 to 28, wherein the molded member is made of an insulating material, a coefficient of linear expansion of the insulating material is 8 x 10⁻⁵/°C or less, the tensile strength of the insulating material is 100 MPa or higher and a dielectric breakdown voltage of the insulating material is 10 MV/m or higher.
